# EUROPEAN PATENT APPLICATION

(11) **EP 4 464 672 A1**
(43) Date of publication of application: **20.11.2024**
(21) Application number: 22920464.9
(22) Date of filing: 24.11.2022
(51) Int. Cl.: C03B 37/012, G02B 6/02, G02B 6/028, G02B 6/036

(54) **METHOD FOR PRODUCING MULTICORE OPTICAL FIBER, AND MULTICORE OPTICAL FIBER**

(30) Priority: 11.01.2022 JP 2022002526
(71) Applicant: SUMITOMO ELECTRIC INDUSTRIES, LTD., Osaka-shi, Osaka 541-0041 (JP)
(72) Inventor: NAGASHIMA, Takuji, Osaka-shi, Osaka 541-0041 (JP)
(74) Representative: TBK
(86) International application number: PCT/JP2022/043417
(87) International publication number: WO 2023/135944

(57) **Abstract**

A method for producing an MCF is a method for producing an MCF including a common cladding, a plurality of cores having a refractive index higher than a refractive index of the common cladding, and a refractive index changing part having a refractive index different from the refractive index of the common cladding. The method for producing an MCF includes: forming a common cladding tube by providing a first glass rod with a plurality of first holes and a second hole passing through the first glass rod in an axial direction, the second hole having a diameter different from a diameter of the first holes; subjecting inner surfaces of the plurality of first holes and an inner surface of the second hole to a gas-phase process; and inserting a plurality of core rods into the plurality of first holes subjected to the gas-phase process, respectively, inserting a refractive index changing part rod into the second hole subjected to the gas-phase process, and performing thermal integration to form a second glass rod. The common cladding tube is formed such that the diameter of the plurality of first holes is no more than 4 times the diameter of the second hole.

## Description

### Technical Field

The present disclosure relates to a method for producing a multicore optical fiber, and a multicore optical fiber. This application claims priority based on Japanese Patent Application No. 2022-002526 filed on January 11, 2022, the entire contents of which are incorporated herein by reference.

### Background Art

A multicore optical fiber (hereinafter, "MCF") is capable of improving core density since a plurality of cores are disposed inside a fiber. Thus, the number of cores can be increased while the outer diameter of an optical fiber cable remains constant. Additionally, the outer diameter of the optical fiber cable can be reduced while the number of cores inside the cable remains constant. Furthermore, use of the MCF as a high-density optical wiring is also contemplated as the distances between the cores can be reduced compared with arranging conventional optical fibers to form a fiber array.

In addition to the cores, an MCF may be provided with a refractive index changing part that has a refractive index different from the refractive index of a common cladding. Patent Literature 1 discloses an MCF provided with a visual marker. Patent Literature 2 discloses an MCF provided with a leakage reducing part that reduces leakage of light from the core region. Producing such an MCF involves preparing a common cladding tube that is provided with a plurality of holes, and subjecting the inner surfaces of the holes of the common cladding tube to a gas-phase process (removing impurities and smoothing). Subsequently, glass rods to be the cores and the refractive index changing part are inserted into the plurality of holes, and after the common cladding tube and the glass rods are thermally integrated, they are spun.

### Citation List

### Patent Literature

[Patent Literature 1] JP 2011-170099 A
[Patent Literature 2] WO 2010/082656 A1

### Summary of Invention

A method for producing an MCF according to an embodiment of the present disclosure is a method for producing an MCF including a common cladding, a plurality of cores having a refractive index higher than a refractive index of the common cladding, and a refractive index changing part having a refractive index different from the refractive index of the common cladding. The method for producing an MCF includes: forming a common cladding tube by providing a first glass rod with a plurality of first holes and a second hole passing through the first glass rod in an axial direction, the second hole having a diameter different from a diameter of the first holes; subjecting inner surfaces of the plurality of first holes and an inner surface of the second hole to a gas-phase process; and inserting a plurality of core rods into the plurality of first holes subjected to the gas-phase process, respectively, inserting a refractive index changing part rod into the second hole subjected to the gas-phase process, and performing thermal integration to form a second glass rod. The common cladding tube is formed such that the diameter of the plurality of first holes is no more than 4 times the diameter of the second hole.

An MCF according to an embodiment of the present disclosure includes a plurality of cores, a plurality of individual claddings surrounding the plurality of cores, a refractive index changing part, and a common cladding surrounding the plurality of individual claddings and the refractive index changing part. The plurality of cores have a refractive index higher than a refractive index of the common cladding. The refractive index changing part has a refractive index different from the refractive index of the common cladding. A diameter of the plurality of individual claddings is greater than 1 and no more than 4 times a diameter of the refractive index changing part.

### Brief Description of Drawings

FIG. 1 is a cross-sectional view of an MCF according to a first embodiment.
FIG. 2 is a graph illustrating an example of a refractive index distribution along arrow x of FIG. 1.
FIG. 3 is a graph illustrating an example of the refractive index distribution along arrow x of FIG. 1.
FIG. 4 is a graph illustrating an example of the refractive index distribution along arrow x of FIG. 1.
FIG. 5 is a graph illustrating an example of the refractive index distribution along arrow x of FIG. 1.
FIG. 6 is a flowchart illustrating a method for producing the MCF according to the first embodiment.
FIG. 7 is a cross-sectional view of a common cladding tube.
FIG. 8 is a conceptual cross-sectional view for explaining a gas-phase process.
FIG. 9 is a cross-sectional view of a second glass rod.
FIG. 10 is a graph illustrating an example of a refractive index distribution of an MCF according to a comparative example.
FIG. 11 is a graph illustrating an example of the refractive index distribution of the MCF according to the comparative example.
FIG. 12 is a cross-sectional view of an MCF according to a second embodiment.
FIG. 13 is a cross-sectional view of a common cladding tube.
FIG. 14 is a cross-sectional view of a second glass rod.

### Description of Embodiments

### [Problem to be Solved by the Present Disclosure]

The diameter of a core is generally designed to be larger than the diameter of a refractive index changing part. In a gas-phase process of a common cladding tube, the ease of flow of the gas for the gas-phase process differs depending on the size of the hole. In the hole corresponding to the refractive index changing part, the diameter is small, so that the gas for the gas-phase process does not flow easily and the gas-phase process does not progress easily. This may cause interfacial bubbles and foreign substance residues which may lead to variation in the cladding diameter. If the total gas flow rate is increased to solve this problem, the gas-phase process will progress too much in the holes corresponding to the cores, and the clearances between the core rods and the holes will be increased. As a result, positional misalignment of the cores may occur.

It is an object of the present disclosure to provide a method for producing an MCF and an MCF which are capable of suppressing variation in the cladding diameter and positional misalignment of cores.

### [Advantageous Effects of the Present Disclosure]

The present disclosure is capable of providing a method for producing an MCF and an MCF which are capable of suppressing variation in the cladding diameter and positional misalignment of cores.

### [Description of Embodiments of the Present Disclosure]

Embodiments of the present disclosure will first be listed and described. A method for producing an MCF according to an embodiment of the present disclosure is a method for producing an MCF including a common cladding, a plurality of cores having a refractive index higher than a refractive index of the common cladding, and a refractive index changing part having a refractive index different from the refractive index of the common cladding. The method for producing an MCF includes: forming a common cladding tube by providing a first glass rod with a plurality of first holes and a second hole passing through the first glass rod in an axial direction, the second hole having a diameter different from a diameter of the first holes; subjecting inner surfaces of the plurality of first holes and an inner surface of the second hole to a gas-phase process; and inserting a plurality of core rods into the plurality of first holes subjected to the gas-phase process, respectively, inserting a refractive index changing part rod into the second hole subjected to the gas-phase process, and performing thermal integration to form a second glass rod. The common cladding tube is formed such that the diameter of the plurality of first holes is no more than 4 times the diameter of the second hole.

In the method for producing an MCF above, in a case in which the diameter of the plurality of first holes is 4 times the diameter of the second hole, it can be estimated that when reducing the inner surfaces of the first holes that have a larger diameter by 0.2 mm by the gas-phase process, the inner surface of the second hole is reduced by 3 µm. This progresses the gas-phase process of the second hole to an extent that interfacial bubbles and foreign substance residues can be suppressed, and suppresses variation in the cladding diameter. This also suppresses the progression of the gas-phase process of the first holes to an extent that an increase in the clearances between the core rods and the first holes can be suppressed, and suppresses positional misalignment of the cores. Furthermore, reducing the diameter of the first holes prevents the holes from interfering with each other, to thereby increase flexibility in the core arrangement. It should be noted that the diameter of the plurality of first holes may be greater than 1 time or no less than 1.1 times the diameter of the second hole.

The common cladding tube may be formed such that the diameter of the plurality of first holes is no more than 3.2 times the diameter of the second hole. In this case, it can be estimated that when reducing the inner surfaces of the first holes by 0.2 mm by the gas-phase process, the inner surface of the second hole is reduced by 6 µm. Consequently, variation in the cladding diameter and positional misalignment of the cores can be suppressed depending on the surface roughness of the inner surface of the second hole.

The common cladding tube may be formed such that the diameter of the plurality of first holes is no more than 2.1 times the diameter of the second hole. In this case, it can be estimated that when reducing the inner surfaces of the first holes by 0.2 mm by the gas-phase process, the inner surface of the second hole is reduced by 20 µm. Consequently, variation in the cladding diameter and positional misalignment of the cores can be suppressed depending on the surface roughness of the inner surface of the second hole.

The common cladding tube may be formed such that the surface roughness of the inner surface of second hole is less than the surface roughness of the inner surfaces of the plurality of first holes. In this case, even if the effect of the gas-phase process for the second hole is reduced, the surface roughness of the inner surface of the second hole after the gas-phase process can be closer to the surface roughness of the inner surfaces of first holes.

An absolute value of a difference between a maximum value of a relative refractive index of the refractive index changing part rod and a relative refractive index of the common cladding tube may be greater than 0.3%, and an absolute value of a difference between a relative refractive index at an outer circumferential surface of the refractive index changing part rod and the relative refractive index of the common cladding tube may be no more than 0.2%. In this case, the visibility or crosstalk (hereinafter, XT) reducing effect of the refractive index changing part can be ensured, the difference in viscosity between the outer circumferential surface of the refractive index changing part and the common cladding can be reduced, and the generation of interfacial bubbles can be suppressed. It should be noted that in the present specification, a "relative refractive index" refers to the refractive index of an object standardized by the refractive index of pure silica glass.

A dopant may be added to the refractive index changing part rod, and a concentration of the dopant in an outer region of the refractive index changing part rod may be less than a concentration of the dopant in an inner region of the refractive index changing part rod. In this case, the relationships of the refractive index and the relative refractive index above between the refractive index changing part rod and the common cladding tube can be achieved.

A first dopant may be added to an inner region of the refractive index changing part rod, and a second dopant different from the first dopant may be added to an outer region of the refractive index changing part rod. In this case, the relationships of the refractive index and the relative refractive index above between the refractive index changing part rod and the common cladding tube can be achieved.

The refractive index changing part may be a marker disposed at a position asymmetrical with respect to a symmetry of an arrangement of the plurality of cores. In this case, the cores of the MCF can be identified.

The refractive index changing part may be a XT reducing part disposed between adjacent cores. In this case, transmission loss of the MCF is suppressed.

The method for producing an MCF above may further include drawing the second glass rod, and the drawing may be performed simultaneously with the forming of the second glass rod. In this case, drawing is performed simultaneously with the forming of the second glass rod by thermally integrating the common cladding tube, the core rods, and the refractive index changing part rod, so that the MCF can be produced efficiently.

The method for producing an MCF above may further include drawing the second glass rod, and the drawing may be performed separately from the forming of the second glass rod. In this case, flexibility in the drawing temperature can be increased since drawing is performed by reheating and melting the second glass rod after the second glass rod is formed.

The MCF according to an embodiment of the present disclosure includes a plurality of cores, a plurality of individual claddings surrounding the plurality of cores, a refractive index changing part, and a common cladding surrounding the plurality of individual claddings and the refractive index changing part. The plurality of cores have a refractive index higher than a refractive index of the common cladding. The refractive index changing part has a refractive index different from the refractive index of the common cladding. A diameter of the plurality of individual claddings is greater than 1 and no more than 4 times a diameter of the refractive index changing part.

In the MCF above, interfacial bubbles and foreign substance residues are suppressed, so that variation in the cladding diameter is suppressed. Positional misalignment of the cores is suppressed.

A diameter of the plurality of individual claddings may be no more than 3.2 times the diameter of the refractive index changing part. Even in this case, variation in the cladding diameter and positional misalignment of the cores can be suppressed.

A diameter of the plurality of individual claddings may be no more than 2.1 times the diameter of the refractive index changing part. Even in this case, variation in the cladding diameter and positional misalignment of the cores can be suppressed.

A maximum value of an absolute value of a difference between a relative refractive index of the refractive index changing part and a relative refractive index of the common cladding may be greater than 0.3%, and an absolute value of a difference between a relative refractive index at an outer circumferential surface of the refractive index changing part and the relative refractive index of the common cladding may be no more than 0.2%. In this case, the visibility or XT reducing effect of the refractive index changing part is ensured, and variation in the cladding diameter is suppressed due to suppression of interfacial bubbles.

A dopant may be added to the refractive index changing part, and a concentration of the dopant in an outer region of the refractive index changing part may be less than a concentration of the dopant in an inner region of the refractive index changing part. In this case, the relationships of the refractive index and the relative refractive index above between the refractive index changing part and the common cladding can be achieved.

A first dopant may be added to an inner region of the refractive index changing part, and a second dopant different from the first dopant may be added to an outer region of the refractive index changing part. In this case, the relationships of the refractive index and the relative refractive index above between the refractive index changing part and the common cladding can be achieved.

### [Details of Embodiments of the Present Disclosure]

Specific examples of the method for producing an MCF and an MCF of the present disclosure will be described below with reference to the drawings. It should be noted that the present invention is not limited to these examples, but is defined by the scope of the claims, and is intended to include all modifications within the meaning and scope equivalent to the scope of the claims. Same reference signs are given to the same elements in the description of the drawings, and redundant description will be omitted.

### (First Embodiment)

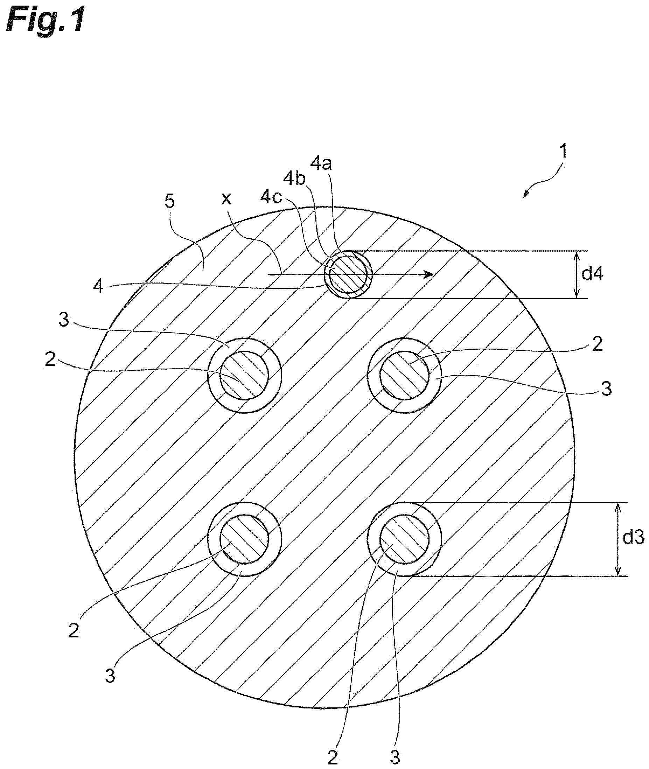

FIG. 1 is a cross-sectional view of an MCF according to a first embodiment. As illustrated in FIG. 1, an MCF 1 according to the first embodiment includes a plurality of cores 2, a plurality of individual claddings 3, a refractive index changing part 4, and a common cladding 5. In this embodiment, there are four cores 2 and four individual claddings 3. MCF 1 is formed of a silica-based glass material.

The plurality of cores 2 extend along a central axis of MCF 1. The plurality of cores 2 are disposed at positions that are rotationally symmetric with respect to the central axis of MCF 1 in a cross-section perpendicular to the central axis of MCF 1. The plurality of cores 2 have the same circular cross-sectional shape. Each core 2 has a diameter of, for example, from 6 µm to 12 µm. Core 2 has a refractive index that is higher than a refractive index of common cladding 5. Core 2 includes, for example, germanium as a dopant for adjusting the refractive index. Alternatively, core 2 includes no dopants for adjusting the refractive index, but may include a dopant (e.g., fluorine) for common cladding 5 to reduce the refractive index.

The plurality of individual claddings 3 surround the plurality of cores 2. Each individual cladding 3 surrounds a corresponding core 2. Individual cladding 3 is in contact with core 2. Individual cladding 3 has a diameter d3 of, for example, from 20 µm to 40 µm. Individual cladding 3 has a thickness of, for example, from 4 µm to 17 µm. Individual cladding 3 has a refractive index that is the same as or different from the refractive index of common cladding 5.

Refractive index changing part 4 is provided spaced apart from the plurality of cores 2 and the plurality of individual claddings 3. Refractive index changing part 4 is disposed at a position that is asymmetric with respect to the symmetry of the arrangement of the plurality of cores 2, that is, a position that breaks the symmetry of the arrangement of the plurality of cores 2. A diameter d4 of refractive index changing part 4 is smaller than a diameter d3 of individual claddings 3. A ratio d3/d4 of diameter d3 to diameter d4 is greater than 1 time and no more than 4 times. That is, diameter d3 is greater than 1 time and no more than 4 times diameter d4. The ratio d3/d4 may be no more than 3.2 times, or no more than 2.1 times. That is, diameter d3 may be no more than 3.2 times, or no more than 2.1 times diameter d4.

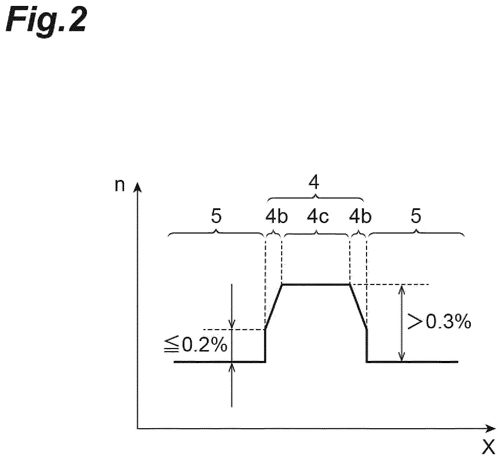

FIGS. 2 to 5 are graphs illustrating examples of a refractive index distribution along arrow x of FIG. 1. As illustrated in FIGS. 2 to 5, refractive index changing part 4 has a refractive index that is different from the refractive index of common cladding 5. Refractive index changing part 4 includes an outer circumferential surface 4a, an outer region 4b that includes outer circumferential surface 4a, and an inner region 4c positioned inward of outer region 4b. Outer circumferential surface 4a is in contact with common cladding 5. Outer region 4b is in contact with inner region 4c. Outer region 4b has a thickness of, for example, from 2 µm to 5 µm. Inner region 4c has a diameter of, for example, from 2 µm to 15 µm.

A refractive index of outer region 4b and a refractive index of inner region 4c are different from each other. An absolute value of the difference between a relative refractive index of inner region 4c and a relative refractive index of common cladding 5 is greater than an absolute value of the difference between a relative refractive index of outer region 4b and the relative refractive index of common cladding 5. The refractive index of inner region 4c is uniform across the entire inner region 4c. The absolute value of the difference between the relative refractive index of inner region 4c and the relative refractive index of common cladding 5 is a maximum value of an absolute value of the difference between a relative refractive index of refractive index changing part 4 and the relative refractive index of common cladding 5. An absolute value of the difference between a maximum value of the relative refractive index of refractive index changing part 4 and the relative refractive index of common cladding 5 is greater than 0.3%.

The refractive index of outer region 4b may be uniform or may vary across the entire outer region 4b. An absolute value of the difference between a relative refractive index at outer circumferential surface 4a of refractive index changing part 4 and the relative refractive index of common cladding 5 is no more than 0.2%. The refractive index changes discontinuously at the interface between outer region 4b and common cladding 5.

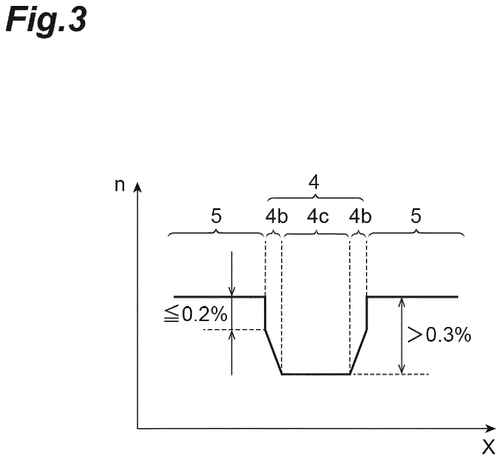

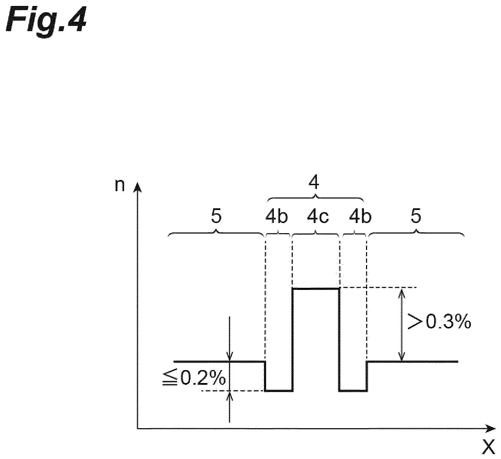

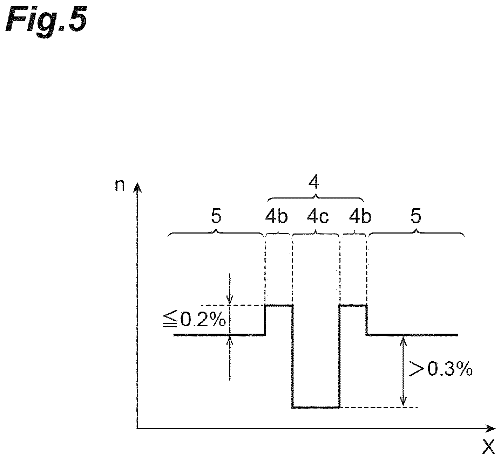

A dopant for adjusting the refractive index is added to refractive index changing part 4. For example, a single dopant may be added to refractive index changing part 4, so that the refractive index distributions as illustrated in FIGS. 2 and 3 are achieved due to the difference in the concentration of the dopant. For example, two types of dopants may be added to refractive index changing part 4, so that the refractive index distributions as illustrated in FIGS. 4 and 5 are achieved due to the difference in the type of the dopants.

In the example shown in FIG. 2, the refractive index of inner region 4c is higher than the refractive index of common cladding 5 and the refractive index of outer region 4b. The refractive index of outer region 4b is lower than the refractive index of inner region 4c and higher than the refractive index of common cladding 5. The refractive index of outer region 4b changes (decreases) so as to approach the refractive index of common cladding 5 from inner region 4c toward outer circumferential surface 4a. The change in the refractive index of outer region 4b is continuous. The absolute value of the difference between the relative refractive index of outer region 4b and the relative refractive index of common cladding 5 is smallest at outer circumferential surface 4a. A single dopant is added to refractive index changing part 4. The dopant is, for example, germanium or chlorine. The concentration of the dopant in outer region 4b is less than the concentration of the dopant in inner region 4c. The concentration of the dopant in outer region 4b changes (decreases) from inner region 4c toward outer circumferential surface 4a.

In the example shown in FIG. 3, the refractive index of inner region 4c is lower than the refractive index of common cladding 5 and the refractive index of outer region 4b. The refractive index of outer region 4b is higher than the refractive index of inner region 4c and lower than the refractive index of common cladding 5. The refractive index of outer region 4b changes (increases) so as to approach the refractive index of common cladding 5 from inner region 4c toward outer circumferential surface 4a. The change in the refractive index of outer region 4b is continuous. The absolute value of the difference between the relative refractive index of outer region 4b and the relative refractive index of common cladding 5 is smallest at outer circumferential surface 4a. A single dopant is added to refractive index changing part 4. The dopant is, for example, fluorine. The concentration of the dopant in outer region 4b is less than the concentration of the dopant in inner region 4c. The concentration of the dopant in outer region 4b changes (decreases) from inner region 4c toward outer circumferential surface 4a.

In the example shown in FIG. 4, the refractive index of inner region 4c is higher than the refractive index of common cladding 5 and the refractive index of outer region 4b. The refractive index of outer region 4b is lower than the refractive index of inner region 4c and the refractive index of common cladding 5. The refractive index of outer region 4b is uniform across the entire outer region 4b. A first dopant and a second dopant of different types are added to refractive index changing part 4. The first dopant is added to inner region 4c. The first dopant is, for example, germanium or chlorine. The second dopant is added to outer region 4b. The second dopant is, for example, fluorine.

In the example shown in FIG. 5, the refractive index of inner region 4c is lower than the refractive index of common cladding 5 and the refractive index of outer region 4b. The refractive index of outer region 4b is higher than the refractive index of inner region 4c and the refractive index of common cladding 5. The refractive index of outer region 4b is uniform across the entire outer region 4b. A first dopant and a second dopant of different types are added to refractive index changing part 4. The first dopant is added to inner region 4c. The first dopant is, for example, fluorine. The second dopant is added to outer region 4b. The second dopant is, for example, germanium or chlorine.

In this embodiment, refractive index changing part 4 is a marker that enables identification of the plurality of cores 2. Common cladding 5 surrounds the plurality of individual claddings 3 and refractive index changing part 4. Common cladding 5 is in contact with each of the plurality of individual claddings 3 and refractive index changing part 4. Common cladding 5 has a diameter (cladding diameter) of, for example, from 100 µm to 300 µm.

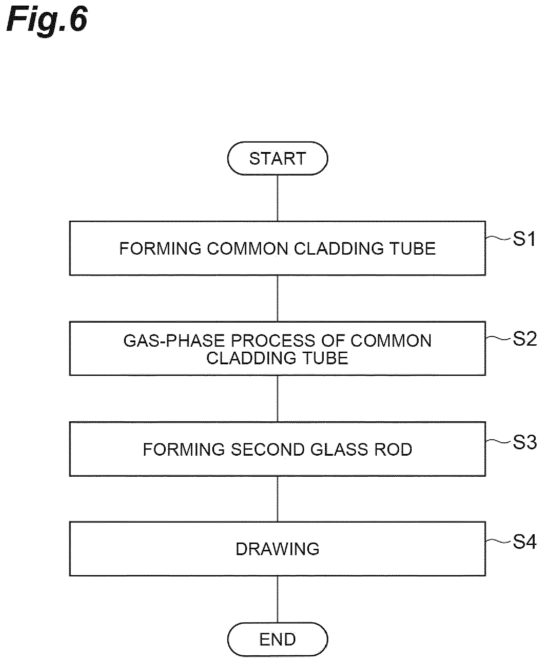

FIG. 6 is a flowchart illustrating a method for producing the MCF according to the first embodiment. As illustrated in FIG. 6, the method for producing MCF 1 includes Step S1 to Step S4.

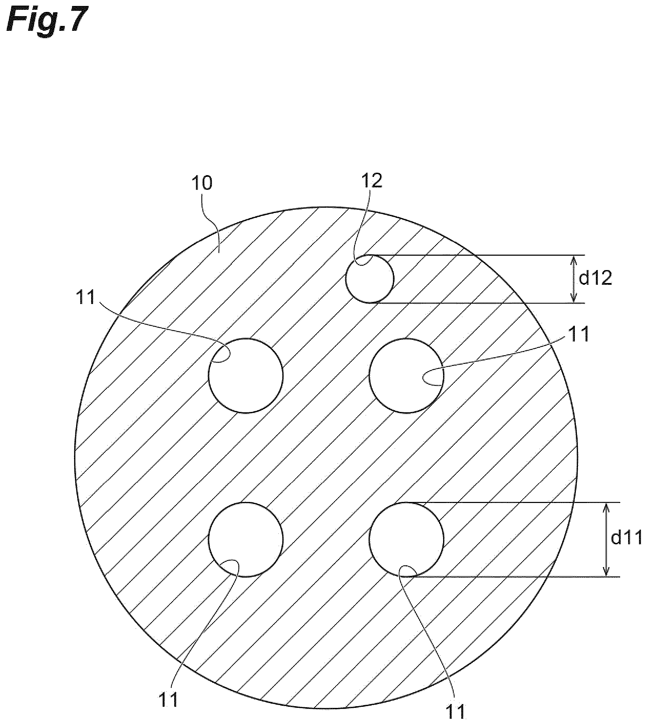

Step S1 is a step of forming a common cladding tube 10 to be common cladding 5. FIG. 7 is a cross-sectional view of a common cladding tube. As illustrated in FIG. 7, in Step S1, common cladding tube 10 is formed by providing a first glass rod (not shown) with a plurality of first holes 11 and a second hole 12 that pass through the first glass rod in an axial direction, second hole 12 having a diameter different from a diameter of first holes 11.

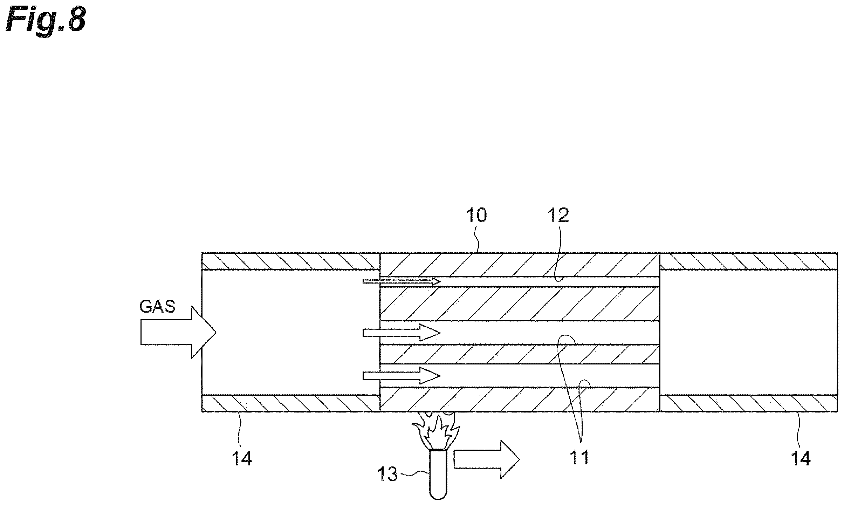

Step S2 is performed after Step S1. Step S2 is a step of subjecting inner surfaces of the plurality of first holes 11 and an inner surface of second hole 12 to a gas-phase process. As illustrated in FIG. 8, the gas-phase process is performed by heating an outer circumferential surface of common cladding tube 10 by an external heat source 13 while flowing a gas for the gas-phase process through the plurality of first holes 11 and second hole 12 of common cladding tube 10. For example, an induction furnace, a resistance furnace, or an oxyhydrogen burner is used as external heat source 13. The gas for the gas-phase process is introduced into common cladding tube 10 via a glass tube 14 that is connected to one end of common cladding tube 10, and discharged from common cladding tube 10 via glass tube 14 connected to the other end of common cladding tube 10.

The gas-phase process is, for example, an etching process for smoothing the inner surfaces of common cladding tube 10 (i.e., the inner surfaces of the plurality of first holes 11 and the inner surface of second hole 12). In this case, an etching gas such as SF₆ is used as the gas for the gas-phase process. The gas-phase process is, for example, a cleaning process for removing foreign substances on the inner surfaces of common cladding tube 10 (i.e., foreign substances on the inner surfaces of the plurality of first holes 11 and foreign substances on the inner surface of second hole 12). In this case, a gas for the cleaning process (i.e., baking gas) such as chlorine or oxygen is used as the gas for the gas-phase process.

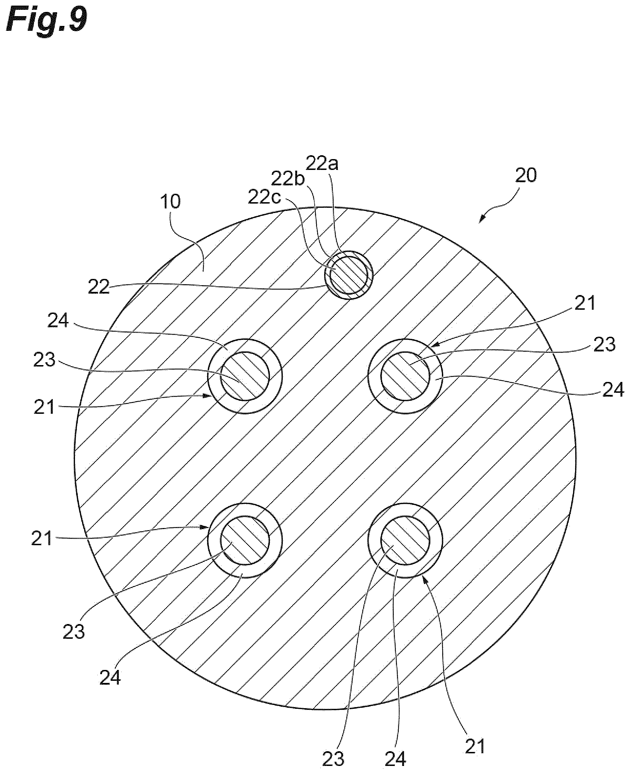

Step S3 is performed after Step S2. Step S3 is a step of inserting a plurality of core rods 21 into the plurality of first holes 11, inserting a refractive index changing part rod 22 into second hole 12, and performing thermal integration to form a second glass rod 20. FIG. 9 is a cross-sectional view of a second glass rod. Second glass rod 20 is an MCF preform. Each of core rods 21 used in Step S3 has a core part 23 to be core 2 and an individual cladding part 24 to be individual cladding 3. Refractive index changing part rod 22 is to be refractive index changing part 4. Refractive index changing part rod 22 includes an outer circumferential surface 22a to be outer circumferential surface 4a, an outer region 22b to be outer region 4b, and an inner region 22c to be inner region 4c.

A refractive index of refractive index changing part rod 22 corresponds to a refractive index of refractive index changing part 4. An absolute value of the difference between a maximum value of a relative refractive index of refractive index changing part rod 22 and a relative refractive index of common cladding tube 10 is greater than 0.3%. An absolute value of the difference between a relative refractive index at outer circumferential surface 22a of refractive index changing part rod 22 and the relative refractive index of common cladding tube 10 is no more than 0.2%.

The dopant added to refractive index changing part rod 22 corresponds to the dopant added to refractive index changing part 4. That is, a single dopant is added to refractive index changing part rod 22 which corresponds to the examples shown in FIGS. 2 and 3. The concentration of the dopant in an outer region of refractive index changing part rod 22 is less than the concentration of the dopant in an inner region of refractive index changing part rod 22. A first dopant and a second dopant of different types are added to refractive index changing part rod 22 which corresponds to the examples shown in FIGS. 4 and 5. The first dopant is added to the inner region of refractive index changing part rod 22. The second dopant is added to the outer region of refractive index changing part rod 22. Refractive index changing part rod 22 which corresponds to the examples shown in FIGS. 4 and 5 is made, for example, by a vapor-phase axial deposition (VAD) method, an outside vapor deposition (OVD) method, or a collapse method.

Step S4 is a step of drawing second glass rod 20 formed in Step S3. MCF 1 is thus produced. Step S4 is performed, for example, at the same time as Step S3. In this case, drawing is performed simultaneously with the forming of second glass rod 20 by thermally integrating common cladding tube 10, core rods 21, and refractive index changing part rod 22. That is, the MCF can be effectively produced since drawing is performed while second glass rod 20 remains in a heated state. Step S4 may be performed separately from Step S3. In this case, flexibility in the drawing temperature can be increased since drawing is performed by reheating and melting second glass rod 20 after second glass rod 20 is formed.

As described above, in the gas-phase process of the common cladding tube, the ease of flow of the gas for the gas-phase process differs depending on the size of the hole. It is thus difficult to smooth the inner surface of a hole having a small diameter, and to obtain the effect of removal of foreign substances. In general, air bubbles tend to remain when the inner surfaces of a common cladding tube have low smoothness. Additionally, foreign substances remaining on the inner surfaces of the common cladding tube lead to a reduction in fiber strength and an increase in transmission loss. In either case, quality defects such as variation in the cladding diameter tend to occur during fiberization. A marker is often disposed closer to the outer circumferential part of the common cladding than the cores, and it is known that air bubbles at the interface between the marker and the common cladding tend to expand during fiberization.

In this embodiment, the range of a ratio d11/d12 of a diameter d11 of the plurality of first holes 11 to a diameter d12 of second hole 12 of common cladding tube 10 is specified to solve the problem above. In general, when the flow of gas in a tube is laminar, a pressure loss ΔP is proportional to the average flow rate inside the tube, and is inversely proportional to the square of the diameter of the hole. Assuming that the pressure losses in holes 11, 12 are equal since the pressure difference between the upstream and downstream sides of common cladding tube 10 (i.e., both ends of common cladding tube 10) is constant, the average flow rates of the gas flowing inside holes 11, 12 are proportional to the squares of diameters d11, d12 of holes 11, 12, respectively. Assuming that the density of the gas is almost constant since (flow volume) = (flow rate) x (cross-sectional area), the flow volumes of the gas flowing through the holes are proportional to the fourth powers of diameters d11, d12 of holes 11, 12, respectively.

Assuming that the gas for the gas-phase process reacts sufficiently, the volumes of the glass that react in holes 11, 12 are proportional to the flow volumes of the gas that flow through holes 11, 12, respectively. Taking into consideration that, in a case in which the same volumes are reduced, the greater the inner surface area (i.e., the larger the diameter) of the hole, the less the thickness that is reduced (specifically, the thickness of each of holes 11, 12 that is reduced is inversely proportional to diameters d11, d12), the ratio of the thickness of holes 11, 12 that are reduced can be calculated.

If the diameter of first holes 11 is too large, clearances between core rods 21 and first holes 11 will increase when being thermally integrated. As a result, positional misalignment of cores 2 may occur. An etching thickness of the inner surface of each hole is proportional to the cube of the diameter of the hole, so that the following trial calculations can be made on the premise that the etching thickness of the inner surfaces of first holes 11 is no more than 0.2 mm.
- When the ratio d11/d12 is 4.0, the etching thickness of the inner surface of second hole 12 is 3 µm.
- When the ratio d11/d12 is 3.2, the etching thickness of the inner surface of second hole 12 is 6 µm.
- When the ratio d11/d12 is 2.1, the etching thickness of the inner surface of second hole 12 is 20 µm.

The surface roughness of the inner surface is in the µm order even when the holes in common cladding tube 10 are made by machining. Consequently, common cladding tube 10 is formed in Step S1 so that the ratio d11/d12 is no more than 4 times, that is, so that diameter d11 is no more than 4 times diameter d12. Depending on the surface roughness of the inner surface of second hole 12, common cladding tube 10 may be formed so that the ratio d11/d12 is no more than 3.2 times, that is, so that diameter d11 is no more than 3.2 times diameter d12, or may be formed so that the ratio d11/d12 is no more than 2.1 times, that is, so that diameter d11 is no more than 2.1 times diameter d12.

As described above, in the method for producing MCF 1, common cladding tube 10 is formed so that the ratio d11/d12 is no more than 4 times in Step S1. This enables the gas-phase process of second hole 12 to progress to an extent that interfacial bubbles and foreign substance residues can be suppressed, and enables variation in the cladding diameter to be suppressed. This also enables the progression of the gas-phase process of first holes 11 to be suppressed to an extent that an increase in the clearances between core rods 21 and first holes 11 can be suppressed, and enables positional misalignment of cores 2 to be suppressed.

It is also contemplated that holes 11, 12 of common cladding tube 10 have the same size to suppress the inconsistency in the progression of the gas-phase process. However, the design of the core is generally prioritized in MCFs, and the refractive index changing part is designed to be smaller than the core. The optical characteristics of the MCF varies significantly with the design of the core. The refractive index changing part, on the other hand, only needs to enable identification if it is a marker, and only needs to be able to reduce XT if it is an XT reducing part. In particular, increasing the core diameter to reduce transmission loss or providing the core with a trench to reduce XT increases the proportion of the plurality of cores in the common cladding, and limits the area in which the refractive index changing part can be disposed. Additionally, in the case in which the refractive index changing part is a marker, it is required to offset the position of the refractive index changing part to break the symmetry of the core arrangement. If the refractive index changing part is large, the offset amount cannot be increased, making it difficult for the refractive index changing part to serve as a marker.

The absolute value of the difference between the maximum value of the relative refractive index of refractive index changing part rod 22 and the relative refractive index of common cladding tube 10 is greater than 0.3%. The visibility of refractive index changing part 4 is thus ensured. The absolute value of the difference between the relative refractive index at outer circumferential surface 22a of refractive index changing part rod 22 and the relative refractive index of the common cladding tube 10A is no more than 0.2%. This enables the difference in viscosity at a collapse interface between refractive index changing part 4 and common cladding 5 to be reduced, and the generation of interfacial bubbles to be suppressed.

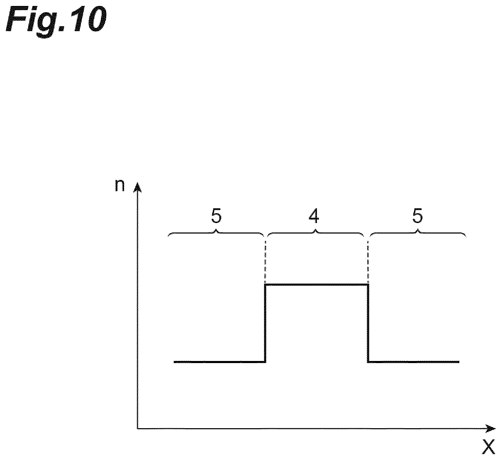

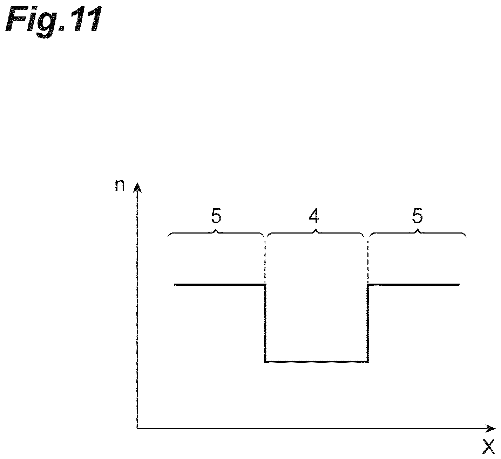

FIGS. 10 and 11 are graphs illustrating examples of a refractive index distribution of an MCF according to a comparative example. As illustrated in FIGS. 10 and 11, the MCF according to the comparative example is different from MCF 1 according to the first embodiment in that a single dopant is uniformly added to the entire region of refractive index changing part 4, and the refractive index of refractive index changing part 4 is uniform across the entire region of refractive index changing part 4. Consequently, the relationships of the refractive index and the relative refractive index above between refractive index changing part 4 and common cladding 5 of this embodiment cannot be achieved in the comparative example. That is, increasing the difference in the relative refractive index between refractive index changing part 4 and common cladding 5 will increase the difference in viscosity between refractive index changing part 4 and common cladding 5, so that interfacial bubbles tend to be generated. Reducing the difference in the relative refractive index between refractive index changing part 4 and common cladding 5 on the other hand will make it impossible to ensure the visibility of refractive index changing part 4.

In this embodiment, for example, a single dopant is added to refractive index changing part rod 22, and the concentration of the dopant in outer region 22b is less than the concentration of the dopant in inner region 22c. Thus, the relationships of the refractive index and the relative refractive index above between refractive index changing part 4 and common cladding 5 are achieved as illustrated in FIGS. 2 and 3. Additionally, for example, a first dopant is added to inner region 22c, and a second dopant different from the first dopant is added to outer region 22b. Thus, the relationships of the refractive index and the relative refractive index above between refractive index changing part 4 and common cladding 5 are achieved as illustrated in FIGS. 4 and 5.

### (Second Embodiment)

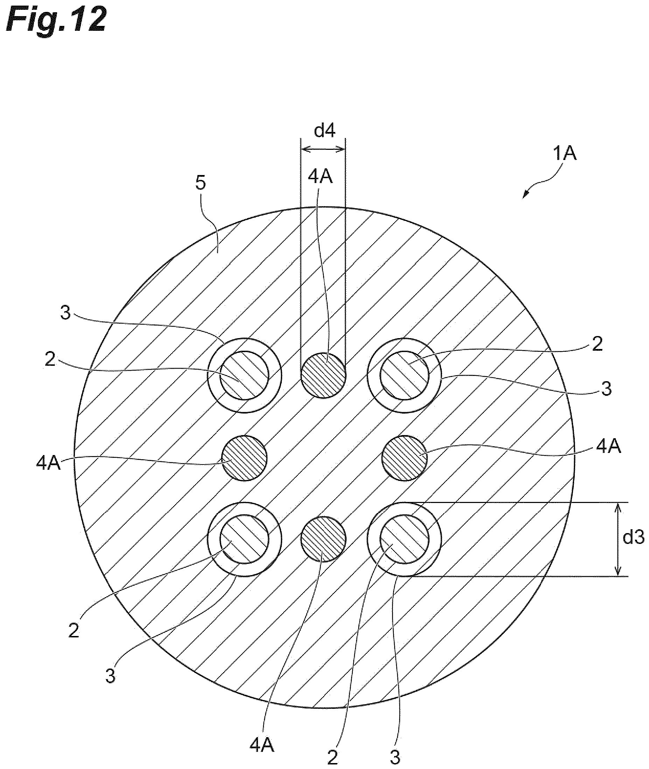

FIG. 12 is a cross-sectional view of an MCF according to a second embodiment. An MCF 1A according to the second embodiment illustrated in FIG. 12 is different from MCF 1 in that MCF 1A has a refractive index changing part 4A instead of refractive index changing part 4. Refractive index changing part 4A is disposed between adjacent cores 2, and is a XT reducing part to be a XT reduction barrier. An absolute value of the difference between a maximum value of a relative refractive index of refractive index changing part 4A and the relative refractive index of common cladding 5 is also greater than 0.3% in MCF 1A. The XT reducing effect by refractive index changing part 4A is thus ensured.

MCF 1A includes, for example, a plurality of refractive index changing parts 4A which are disposed at a plurality of places. In this embodiment, MCF 1A has four refractive index changing parts 4A.

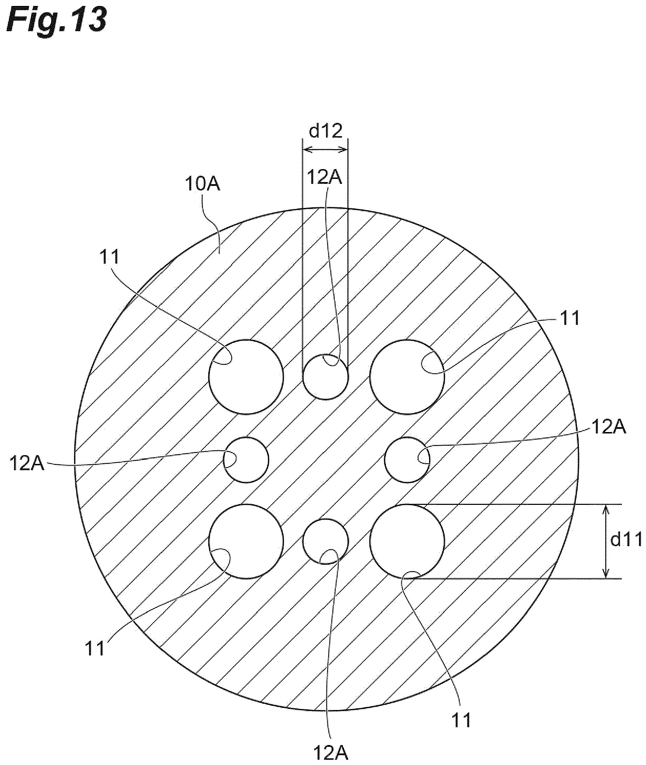

In a method for producing MCF 1A according to the second embodiment, a common cladding tube 10A as illustrated in FIG. 13 is formed in Step S1. Common cladding tube 10A is different from common cladding tube 10 in that a second hole 12A is provided instead of second hole 12. For example, common cladding tube 10A is provided with a plurality of second holes 12A. In this embodiment, common cladding tube 10A is provided with four second holes 12A. Step S2 is performed similarly to Step S2 of the method for producing MCF 1.

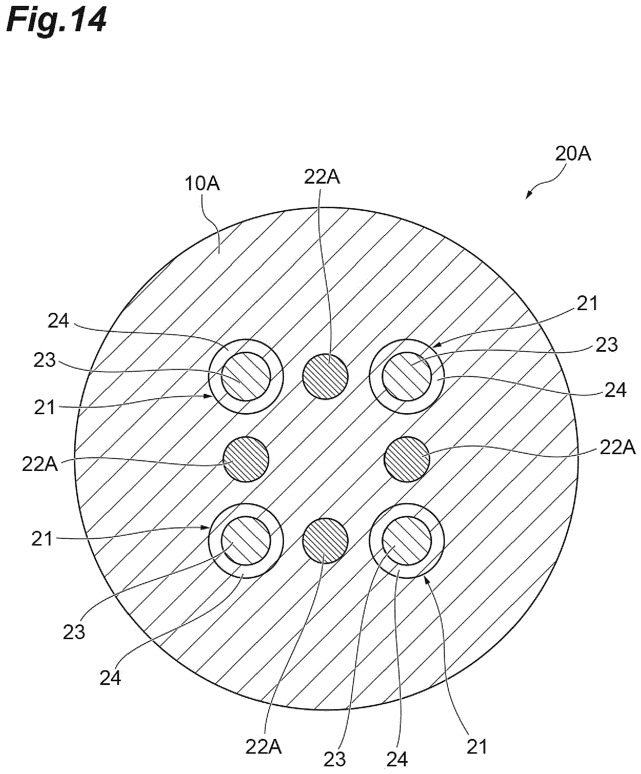

In Step S3 of the method for producing MCF 1A, core rods 21 and refractive index changing part rods 22A are inserted into common cladding tube 10A and thermally integrated to form a second glass rod 20A illustrated in FIG. 14. Second glass rod 20A is different from second glass rod 20 in that it has common cladding tube 10A and refractive index changing part rods 22A instead of common cladding tube 10 and refractive index changing part rod 22. Step S4 is performed similarly to Step S4 of the method for producing MCF 1.

Variation in the cladding diameter and positional misalignment of cores 2 can also be suppressed in the second embodiment similarly to the first embodiment.

Although the embodiments have been described above, the present disclosure is not necessarily limited to the embodiments and variations above, and various modifications are possible without departing from the gist thereof.

In Step S1, common cladding tube 10 may be formed such that the surface roughness of the inner surface of second hole 12 is less than the surface roughness of the inner surfaces of the plurality of first holes 11. Thus, even if the effect of the gas-phase process of second hole 12 is reduced in Step S2, the surface roughness of the inner surface of second hole 12 after the gas-phase process can be closer to the surface roughness of the inner surfaces of first holes 11. A method of changing the size of the drill used for forming holes, a method of reducing the processing speed, a method of polishing the inner surface after forming the hole, etc., are contemplated as a method for changing the surface roughness of the inner surface of second hole 12.

The surface roughness can be measured by a commercially available surface roughness measuring device. The surface roughness is, for example, an arithmetic mean roughness. The surface roughness can be confirmed by measuring an area of about 5 mm.

The embodiments and variations above may be combined as appropriate.

### Reference Signs List

- 1, 1A: MCF
- 2: Core
- 3: Individual cladding
- 4: Refractive index changing part
- 4a: Outer circumferential surface
- 4b: Outer region
- 4c: Inner region
- 5: Common cladding
- 10: Common cladding tube
- 11: First hole
- 12: Second hole
- 13: External heat source
- 14: Glass tube
- 20: Second glass rod
- 21: Core rod
- 22: Refractive index changing part rod
- 22a: Outer circumferential surface
- 22b: Outer region
- 22c: Inner region
- 23: Core part
- 24: Individual cladding part
- d3: Diameter
- d4: Diameter
- d11: Diameter
- d12: Diameter

## Claims

1. A method for producing a multicore optical fiber comprising a common cladding, a plurality of cores having a refractive index higher than a refractive index of the common cladding, and a refractive index changing part having a refractive index different from the refractive index of the common cladding, the method comprising:
forming a common cladding tube by providing a first glass rod with a plurality of first holes and a second hole passing through the first glass rod in an axial direction, the second hole having a diameter different from a diameter of the first holes;
subjecting inner surfaces of the plurality of first holes and an inner surface of the second hole to a gas-phase process; and
inserting a plurality of core rods into the plurality of first holes subjected to the gas-phase process, respectively, inserting a refractive index changing part rod into the second hole subjected to the gas-phase process, and performing thermal integration to form a second glass rod,
wherein the common cladding tube is formed such that the diameter of the plurality of first holes is no more than 4 times the diameter of the second hole.

2. The method for producing a multicore optical fiber according to claim 1, wherein the common cladding tube is formed such that the diameter of the plurality of first holes is no more than 3.2 times the diameter of the second hole.

3. The method for producing a multicore optical fiber according to claim 1 or 2, wherein the common cladding tube is formed such that the diameter of the plurality of first holes is no more than 2.1 times the diameter of the second hole.

4. The method for producing a multicore optical fiber according to any one of claims 1 to 3, wherein the common cladding tube is formed such that a surface roughness of the inner surface of the second hole is less than a surface roughness of the inner surfaces of the plurality of first holes.

5. The method for producing a multicore optical fiber according to any one of claims 1 to 4,
wherein an absolute value of a difference between a maximum value of a relative refractive index of the refractive index changing part rod and a relative refractive index of the common cladding tube is greater than 0.3%, and
wherein an absolute value of a difference between a relative refractive index at an outer circumferential surface of the refractive index changing part rod and the relative refractive index of the common cladding tube is no more than 0.2%.

6. The method for producing a multicore optical fiber according to claim 5,
wherein a dopant is added to the refractive index changing part rod, and
wherein a concentration of the dopant in an outer region of the refractive index changing part rod is less than a concentration of the dopant in an inner region of the refractive index changing part rod.

7. The method for producing a multicore optical fiber according to claim 5,
wherein a first dopant is added to an inner region of the refractive index changing part rod, and
wherein a second dopant different from the first dopant is added to an outer region of the refractive index changing part rod.

8. The method for producing a multicore optical fiber according to any one of claims 1 to 7, wherein the refractive index changing part is disposed at a position asymmetrical with respect to a symmetry of an arrangement of the plurality of cores.

9. The method for producing a multicore optical fiber according to any one of claims 1 to 7, wherein the refractive index changing part is a crosstalk reducing part disposed between adjacent cores.

10. The method for producing a multicore optical fiber according to any one of claims 1 to 9, further comprising drawing the second glass rod,
wherein the drawing is performed simultaneously with the forming of the second glass rod.

11. The method for producing a multicore optical fiber according to any one of claims 1 to 9, further comprising drawing the second glass rod,
wherein the drawing is performed separately from the forming of the second glass rod.

12. A multicore optical fiber comprising:
a plurality of cores;
a plurality of individual claddings surrounding the plurality of cores;
a refractive index changing part; and
a common cladding surrounding the plurality of individual claddings and the refractive index changing part,
wherein the plurality of cores have a refractive index higher than a refractive index of the common cladding,
wherein the refractive index changing part has a refractive index different from the refractive index of the common cladding, and
wherein a diameter of the plurality of individual claddings is greater than 1 time and no more than 4 times a diameter of the refractive index changing part.

13. The multicore optical fiber according to claim 12, wherein the diameter of the plurality of individual claddings is no more than 3.2 times the diameter of the refractive index changing part.

14. The multicore optical fiber according to claim 12 or 13, wherein the diameter of the plurality of individual claddings is no more than 2.1 times the diameter of the refractive index changing part.

15. The multicore optical fiber according to any one of claims 12 to 14,
wherein a maximum value of a difference between a relative refractive index of the refractive index changing part and a relative refractive index of the common cladding is greater than 0.3%, and
wherein an absolute value of a difference between a relative refractive index at an outer circumferential surface of the refractive index changing part and the relative refractive index of the common cladding is no more than 0.2%.

16. A multicore optical fiber according to claim 15,
wherein a dopant is added to the refractive index changing part, and
wherein a concentration of the dopant in an outer region of the refractive index changing part is less than a concentration of the dopant in an inner region of the refractive index changing part.

17. A multicore optical fiber according to claim 15,
wherein a first dopant is added to an inner region of the refractive index changing part, and
wherein a second dopant different from the first dopant is added to an outer region of the refractive index changing part.

18. A multicore optical fiber according to any one of claims 12 to 17, wherein the refractive index changing part is disposed at a position asymmetrical with respect to a symmetry of an arrangement of the plurality of cores.

19. A multicore optical fiber according to any one of claims 12 to 17, wherein the refractive index changing part is a crosstalk reducing part disposed between adjacent cores.
